# EUROPEAN PATENT APPLICATION

(11) **EP 4 848 440 A1**
(43) Date of publication of application: **02.12.2026**
(21) Application number: 25924259.2
(22) Date of filing: 24.12.2025
(51) Int. Cl.: H01M 50/258, H01M 50/24, H01M 50/256, H01M 50/204

(54) **BATTERY PACK AND DEVICE INCLUDING SAME**

(30) Priority: 04.02.2025 KR 20250013757
(71) Applicant: LG ENERGY SOLUTION, LTD., Seoul 07335 (KR)
(72) Inventor: YUN, Youngwon, Daejeon 34122 (KR); KIM, Kiyoun, Daejeon 34122 (KR); PARK, Gidong, Daejeon 34122 (KR); PARK, Daewoo, Daejeon 34122 (KR); AHN, Jong Kyu, Daejeon 34122 (KR); OH, Sunghoon, Daejeon 34122 (KR); LEE, Dong Geun, Daejeon 34122 (KR); JEONG, Gyeongsu, Daejeon 34122 (KR); CHO, Hyun, Daejeon 34122 (KR)
(74) Representative: Plasseraud IP
(86) International application number: PCT/KR2025/022729
(87) International publication number: WO 2026/168748

(57) **Abstract**

A battery pack according to an embodiment of the present disclosure comprises: a first case configured to house a first cell module assembly; and a second case configured to house a second cell module assembly stacked on the first cell module assembly, and capable of being coupled to and separated from the first case, wherein a lower coupling part configured to be movable is formed on the inside surface of the second case, and wherein an upside coupling part coupled with at least a part of the lower coupling part is formed on the upper part of the first case.

## Description

### TECHNICAL FIELD

### Cross-Reference to Related Application(s)

This application claims priority to and the benefit of Korean Patent Application No. 10-2025-0013757, filed on February 4, 2025, the entire contents of which are incorporated herein by reference.

The present disclosure relates to a battery pack and a device including the same, and more particularly, to a battery pack including a movable plunger and a push plate, and a device including the same.

### BACKGROUND ART

In modern society, as portable devices such as a mobile phone, a notebook computer, a camcorder and a digital camera have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case, which seals and houses the electrode assembly together with an electrolyte.

Generally, the lithium secondary battery may be classified based on the shape of the exterior material into a cylindrical secondary battery in which an electrode assembly is incorporated into a cylindrical metal can, and a pouch-type secondary battery in which an electrode assembly is incorporated into a pouch of an aluminum laminate sheet.

Such secondary batteries have been widely used in the form of battery packs in medium- and large-sized devices such as electric vehicles and energy storage systems, as well as in small devices such as portable electronic devices. The battery packs used in medium- and large-sized devices may be configured in such a manner that a plurality of battery cells are stacked to form a battery module, and a plurality of such battery modules are housed in a pack case. In addition, the battery pack may be configured in such a manner that a stack formed by stacking a plurality of battery cells is wrapped around a frame to form a cell module assembly (CMA), and a plurality of such cell module assemblies are directly stacked.

In the case of a structure constituted by directing stacking a plurality of cell module assemblies, each cell module assembly may be housed in each of the plurality of outer cases, and the outer cases may be stacked up and down. In this case, a structure is needed that maintains a coupling force of a certain level or higher between the outer cases while facilitating coupling and separation. Furthermore, it is necessary to ensure that the coupling structure between the outer cases is not exposed to the outside, thereby preventing the coupling structure from being damaged by the external environment.

### DETAILED DESCRIPTION OF THE INVENTION

### Technical Problem

It is an object of the present disclosure to facilitate the coupling and separation between cases containing cell module assemblies by using a plunger and a push plate formed on the inside surface of the cases, and also ensure that the coupling structure between the outer cases is not exposed to the outside, thereby preventing the coupling structure from being damaged by the external environment, .

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a battery pack comprising: a first case configured to house a first cell module assembly; and a second case configured to house a second cell module assembly stacked on the first cell module assembly, and capable of being coupled to and separated from the first case, wherein a lower coupling part configured to be movable is formed on the inside surface of the second case, and wherein an upside coupling part coupled with at least a part of the lower coupling part is formed on the upper part of the first case.

The lower coupling part comprises a plunger of which at least a part is movable, and the upper coupling part may be formed with a fastening hole into which at least a part of the plunger is inserted.

The plunger comprises: a fastening member configured to be movable and inserted into the fastening hole of the first case; and an elastic member that moves the fastening member using elastic force, and as the second case moves downward, the fastening member is pushed and retracted by the upper coupling member, and then advanced to its initial position by the elastic member to be inserted into the fastening hole, thereby coupling the first case and the second case.

The lower coupling part further comprises a push plate which is formed under the fastening member on the inside surface of the second case, and in a state where the first case and the second case are coupled, the push plate is moved upward to push and retract the fastening member, so that the fastening member may be detached from the fastening hole and the first case and the second case may be separated.

The upper coupling part of the fastening member or the part in contact with the push plate may be formed with a curved surface.

The fastening member may be moved in a direction perpendicular to the direction in which the first cell module assembly and the second cell module assembly are stacked.

The plunger further comprises a fixing member fixed to the second case, and the elastic member may be configured such that one side is connected to the fastening member and the other side is connected to the fixing member.

The push plate may be formed to extend long along a circumference of the inside surface of the second case.

The push plate may be moved along the direction in which the first cell module assembly and the second cell module assembly are stacked.

The second cell module assembly may comprise a battery cell stack; and an assembly frame configured to house the battery cell stack.

The assembly frame may be formed with a protruding part that extends from a corner of the lower surface of the assembly frame in a direction parallel to the extension direction of the lower surface of the assembly frame, and the push plate may be seated on the protruding part of the assembly frame.

The protruding part may be formed to extend from an apex of the lower surface of the assembly frame.

The protruding part may be formed with a hooking protrusion protruded upward from the protruding part, the push plate may be formed with a hooking part recessed from the inside surface of the second case toward the internal space in which the second cell module assembly is housed, and the push plate may be seated on the protruding part of the assembly frame while the hooking part is caught by the hooking protrusion.

The second case may have a form where the upper and lower parts are opened, and one or more handles may be provided on the upper surface of the second cell module assembly.

According to another aspect of the present disclosure, provided is a device comprising the battery pack.

### Advantageous Effects

According to embodiments of the present disclosure, a plurality of cases are coupled and separated through a plunger and a push plate formed on the inside surface, thereby facilitating coupling and separation and ensuring that the coupling structure is not exposed to the outside, which has the effect of preventing damage due to the external environment.

The effects of the present disclosure are not limited to the effects mentioned above, and additional other effects not mentioned above will be clearly understood from the description of the appended claims by those skilled in the art.

### BRIEF DESCRIPTION OF THE DRAWINGS

FIG. 1 is a perspective view of a battery pack according to an embodiment of the present disclosure.
FIG. 2 is an exploded perspective view of the battery pack shown in FIG. 1.
FIG. 3 is a cross-sectional view taken along line III-III' of FIG. 1, which shows two cell module assemblies and a case stacked up and down.
FIG. 4 is a diagram showing the configuration of a plunger according to an embodiment of the present disclosure.
FIG. 5 is an enlarged view of a section A of FIG. 3.
FIG. 6 is an enlarged view of a section B of FIG. 2.
FIG. 7 is an enlarged view of a section C of FIG. 2.
FIGS. 8 and 9 are diagrams illustrating the principle of coupling a first case and a second case according to an embodiment of the present disclosure.
FIGS. 10 to 12 are diagrams illustrating the principle of separating a first case and a second case according to an embodiment of the present disclosure.

### DETAILED DESCRIPTION OF THE EMBODIMENTS

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

In order to clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Meanwhile, although terms representing directions such as upward, downward, left, right, forward, and backward are used in the present embodiment, it would be obvious to those skilled in the art that these terms are only for convenience of explanation and may vary depending on the location of the target object or the location of the observer.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

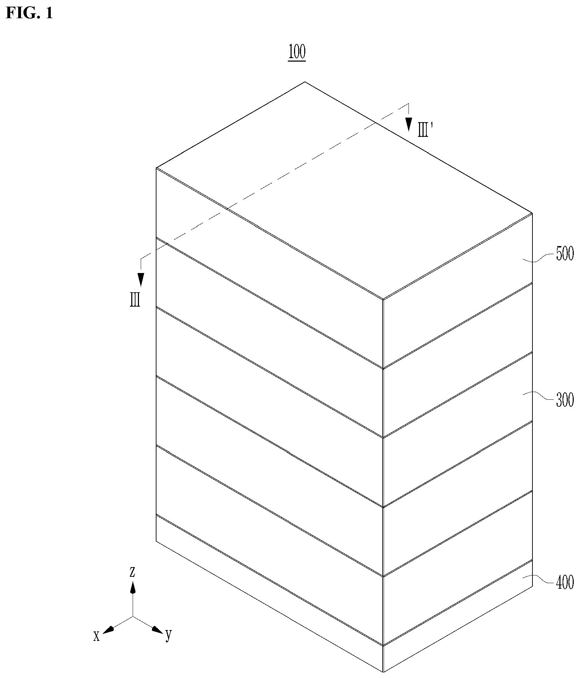

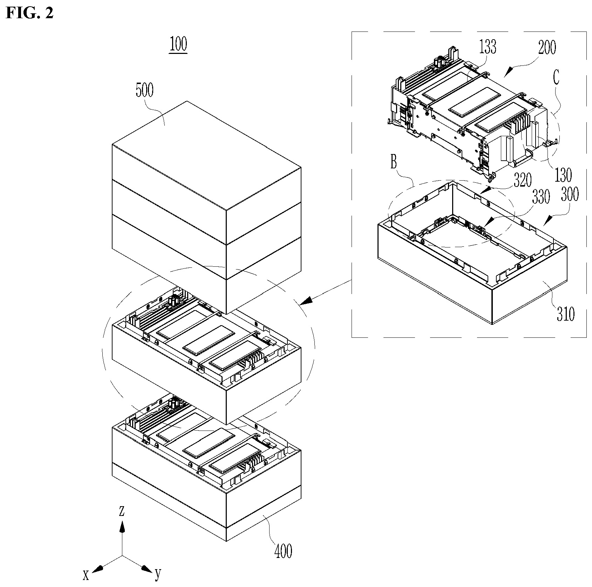

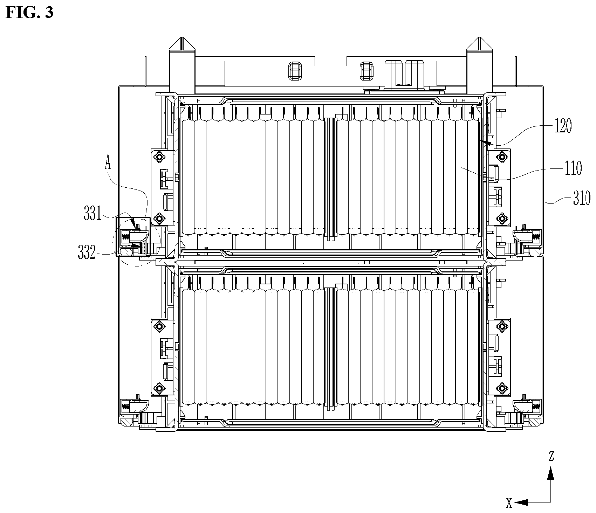

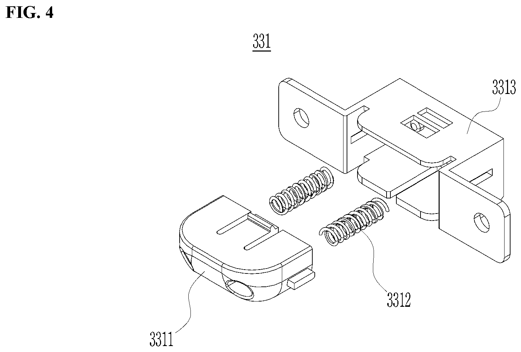

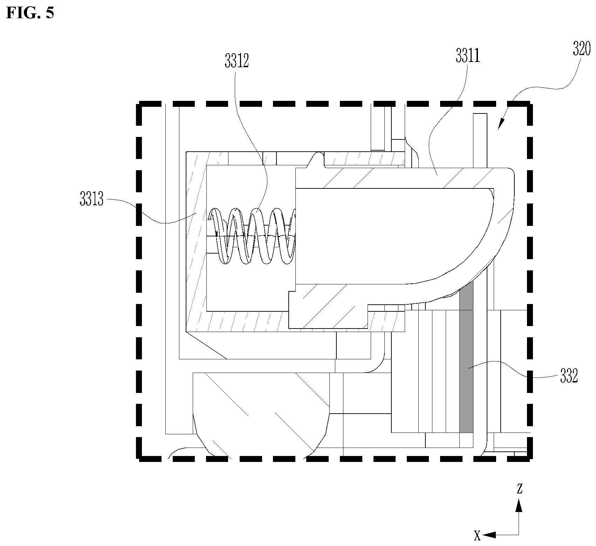

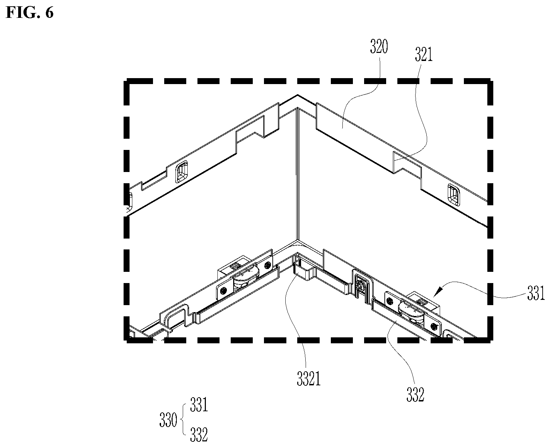

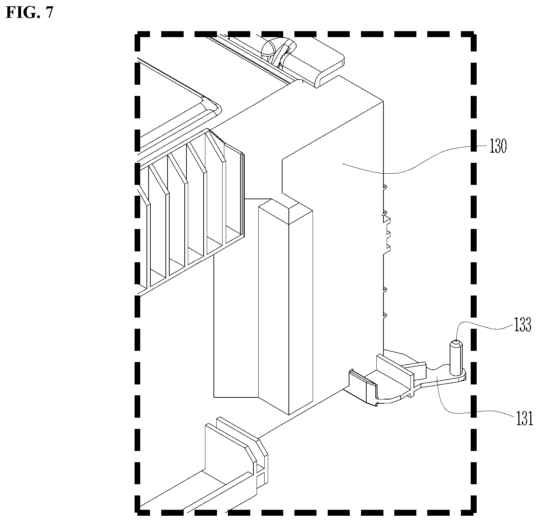

FIG. 1 is a perspective view of a battery pack according to an embodiment of the present disclosure. FIG. 2 is an exploded perspective view of the battery pack shown in FIG. 1. FIG. 3 is a cross-sectional view taken along line III-III' of FIG. 1, which shows two cell module assemblies and a case stacked up and down. FIG. 4 is a diagram showing the configuration of a plunger according to an embodiment of the present disclosure. FIG. 5 is an enlarged view of a section A of FIG. 3. FIG. 6 is an enlarged view of a section B of FIG. 2. FIG. 7 is an enlarged view of a section C of FIG. 2.

Referring to FIGS. 1 to 7, a battery pack 100 according to an embodiment of the present disclosure may include a plurality of cell module assemblies 200, a plurality of cases 300 in which each of the cell module assemblies 200 is housed, a base part 400 that supports the lower part of the cell module assembly 200 and the case 300 disposed on the lowest part, and a protection part 500 that covers the opened upper surface of the cell module assembly 200 disposed at the highest part.

The cell module assembly 200 may include a battery cell stack 120 in which a plurality of battery cells 110 are stacked. The battery cell stack 120 may be formed by stacking a plurality of battery cells 110 in one direction. The battery cell 110 may be a pouch-type battery cell. The battery cell 110 may be produced by housing the electrode assembly in a pouch case made of a laminate sheet including a resin layer and a metal layer, and then thermally fusing the sealing part of the pouch case. The battery cells 110 may be formed in a plurality, and the plurality of battery cells 110 may form a battery cell stack 120 that is stacked so as to be electrically connected to each other.

The cell module assembly 200 may include an assembly frame 130 in which the battery cell stack 120 is housed. The assembly frame 130 may cover at least a part of the battery cell stack 120. The assembly frame 130 may cover the upper, lower, and side surfaces of the battery cell stack 120. The assembly frame 130 in which the battery cell stack 120 is housed may be disposed in the internal space of the case 300.

One or more handles 133 may be provided on the upper surface of the assembly frame 130. A worker for assembling the battery pack 100 may lift and move the cell module assembly 200 using the handles 133.

A protruding part 131 may be formed on the lower edge of the assembly frame 130. The protruding part 131 may be formed to extend from the edge of the lower surface of the assembly frame 130 in a direction parallel to the extension direction of the lower surface of the assembly frame 130. The protruding part 131 may be formed to extend from the apex of the lower surface of the assembly frame 130 in a direction parallel to the extension direction of the lower surface of the assembly frame 130. In a state where the cell module assembly 200 is housed in the case 300, a push plate 332, which will be described later, may be seated on the protruding part 131 of the assembly frame 130.

A hooking protrusion 132 may be formed on the protruding part 131. The hooking protrusion 132 may be formed to protrude in a direction toward the upper part from the protruding part 131. In a state where the cell module assembly 200 is housed in the case 300, the push plate 332 may be seated on the protruding part 131 while the hooking part 3321 of the push plate 332 is caught by the hooking protrusion 132 of the assembly frame 130.

The cell module assembly 200 may be at least partially covered by the case 300. The side surfaces of the cell module assembly 200 may be covered by the case 300. In this case, the opened upper and lower surfaces of the cell module assembly 200 may be covered by another cell module assembly 200, a base part 400, or a protection part 500 which are stacked on the upper and lower parts. In this way, the battery pack 100 according to an embodiment of the present disclosure may have a structure in which a plurality of cell module assemblies 200 and a plurality of cases 300 are stacked, and the specific details regarding this will be described later.

The case 300 may be formed to cover at least a part of the cell module assembly 200. The case 300 may be formed with an internal space, and the cell module assembly 200 may be disposed in this internal space. The case 300 may be constituted of a plurality of side walls 310, and may have a form of which upper and lower parts are opened. Therefore, in a state where the cell module assembly 200 is disposed in the internal space of the case 300, the side surfaces of the cell module assembly 200 may be covered by the side walls 310 of the case 300. As described above, the battery pack 100 according to an embodiment of the present disclosure have a structure in which a plurality of cell module assemblies 200 are stacked up and down. Therefore, the cases 300 may also be provided in a plurality so as to cover each cell module assembly 200.

The case 300 may include an upper coupling part 320 and a lower coupling part 330.

The lower coupling part 330 may be formed on the inside surface of the case 300. The lower coupling part 330 may be formed in the lower part of the inside surface of the case 300. The lower coupling part 330 may be formed in the lower part of the inside surface of the case 300. In other words, the lower coupling part 330 may be formed under the intermediate point on the inside surface of the case 300 on the basis of the up-and-down direction (z-axis direction in the drawing). The lower coupling part 330 may be configured such that at least a part thereof is movable. The lower coupling part 330 may include a movable plunger 331 and a push plate 332.

The plunger 331 may be configured such that at least a part thereof is movable. The movable portion of the plunger 331 may be inserted into a fastening hole 321 formed in the upper coupling part 320 of another case 300 which is disposed below. Therefore, the cases 300 which are stacked up and down may be coupled.

The plunger 331 may include a fastening member 3311, an elastic member 3312, and a fixing member 3313.

The fastening member 3311 may be configured to be movable. The fastening member 3311 may move in a direction perpendicular to the up-and-down direction. Here, the up-and-down direction refers to the direction in which the plurality of cell module assemblies 200 and the plurality of cases 300 are stacked (the z-axis direction in the drawing). The fastening member 3311 may be pushed and retracted by the push plate 332 or the upper coupling part 320 of another case 300 disposed below. The fastening member 3311 may be advanced to its initial position by the elastic member 3312. At least a part of the fastening member 3311 may be formed with a curved surface. The fastening member 3311 may be pushed and moved by the push plate 332 or the uppermost end of the upper coupling part 320 of another case 300. At this time, a curved surface may be formed at the portion where the fastening member 3311 contacts the push plate 332 or the uppermost end of the upper coupling part 320 of another case 300. This curved surface may be formed in the lower part of the fastening member 3311. The fastening member 3311 may be inserted into a fastening hole 321 formed in the upper coupling part 320 of another case 300 which is disposed below.

The elastic member 3312 may be connected to the fastening member 3311 and the fixing member 3313. One side of the elastic member 3312 may be connected to the fastening member 3311, and the other side may be connected to the fixing member 3313. The elastic member 3312 may move the fastening member 3311 using elastic force. More specifically, the elastic member 3312 may advance the fastening member 3311, which is in a state of being retracted due to the push plate 332 or the upper coupling part 320 of another case 300 disposed below, to its initial position using elastic force. The elastic member 3312 may be a spring. However, the elastic member 3312 is not necessarily limited to a spring, and may be constituted of various materials and shapes that can move the fastening member 3311 using elastic force.

The fixing member 3313 may be connected to the elastic member 3312. The fixing member 3313 may be connected to the other side of the elastic member 3312. The fixing member 3313 may be fixed to the side wall 310 of the case 300. The fixing member 3313 may be fixed to the side wall 310 of the case 300 by means of a bolt fastening method or the like.

The push plate 332 may be formed on the inside surface of the case 300. The push plate 332 may be formed to extend along a circumference of the inside surface of the case 300. The push plate 332 may be located in the lower part of the plunger 331. The push plate 332 may be located in the lower part of the fastening member 3311 of the plunger 331 on the inside surface of the case 300. The push plate 332 may be configured to be movable. The push plate 332 can move along the up-and-down direction. At least a part of the push plate 332 may be formed with a hooking part 3321 recessed in a direction from the inner surface of the case 300 toward the internal space. In a state where the cell module assembly 200 is housed in the case 300, the push plate 332 may be seated on the protruding part 131 of the assembly frame 130 while the hooking part 3321 of the push plate 332 is caught by the hooking protrusion 132 of the assembly frame 130.

The upper coupling part 320 may be formed on the upper part of the case 300. The upper coupling part 320 may be formed at the upper end of the case 300. The upper coupling part 320 may have a wall shape that extends upward from the upper part of the side wall 310 of the case 300. The upper coupling part 320 may be coupled to at least a part of the lower coupling part 330 of another case 300 stacked on the upper part. A fastening hole 321 may be formed in the upper coupling part 320. At least a part of the plunger 331 of the lower coupling part 330 of the other case 300 may be inserted into the fastening hole 321. A fastening member 3311 of the lower coupling part 330 of another case 300 may be inserted into the fastening hole 321. Thereby, the cases 300 stacked up and down can be coupled.

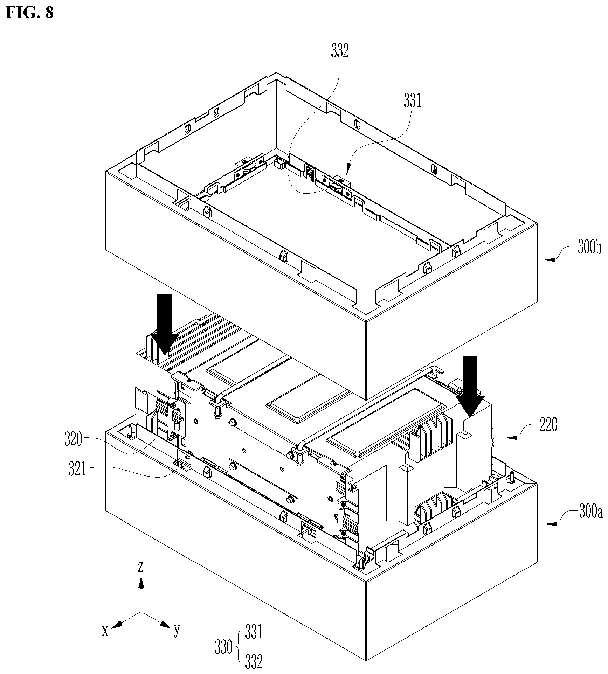

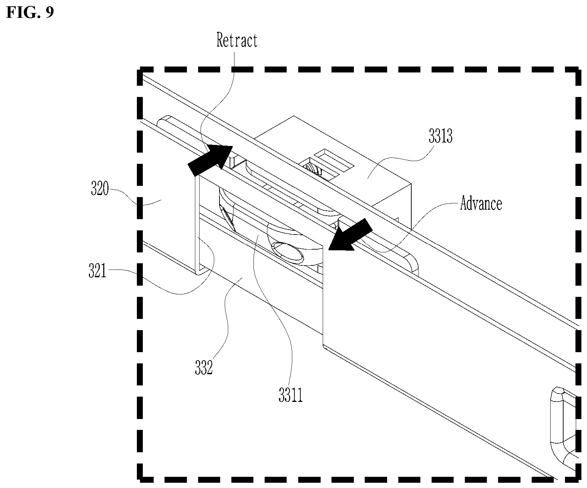

FIGS. 8 and 9 are diagrams illustrating the principle of coupling a first case 300a and a second case 300b according to an embodiment of the present disclosure. Specifically, FIG. 8 is a diagram illustrating the second case 300b moving downward while the second cell module assembly 220 is stacked on the first cell module assembly housed in the first case 300a. FIG. 9 is a diagram illustrating the principle by which the fastening member 3311 of the second case 300b is inserted into the fastening hole 321 formed in the upper coupling part 320 of the first case 300a.

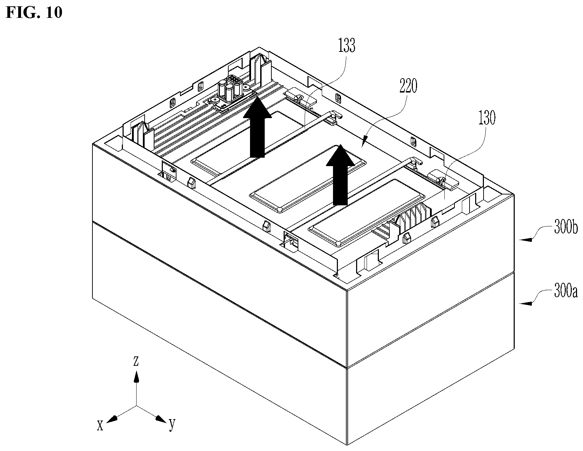

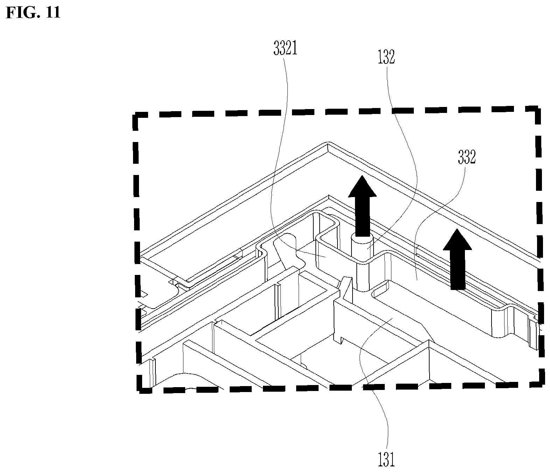

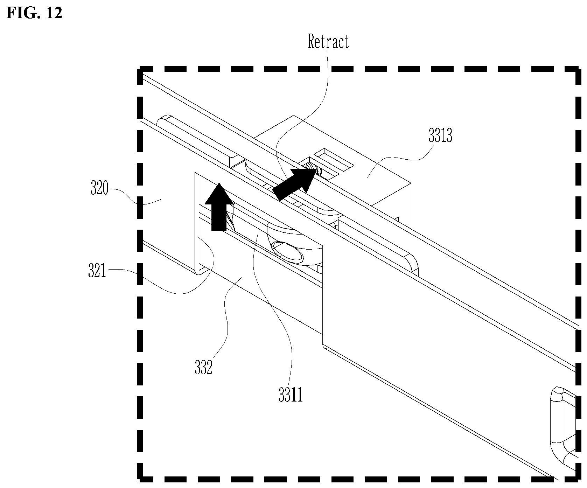

FIGS. 10 to 12 are diagrams illustrating the principle of separating a first case 300a and a second case 300b according to an embodiment of the present disclosure. Specifically, FIG. 10 is a diagram showing a state in which the first case 300a and the second case 300b are coupled. FIG. 11 is a diagram showing a state in which the push plate 332 is seated on the protruding part 131 of the assembly frame 130. FIG. 12 is a diagram illustrating the principle by which the fastening member 3311 of the second case 300b is detached from the fastening hole 321 of the first case 300a.

The principle of coupling and separating a plurality of cases 300 configured to house cell module assemblies 200 according to an embodiment of the present disclosure will be described in detail with reference to FIGS. 8 to 12.

Prior to the description, a battery pack 100 according to an embodiment of the present disclosure may include a plurality of cell module assemblies 200 and a plurality of cases 300. The cell module assembly 200 may include a first cell module assembly (not shown) and a second cell module assembly 220. The case 300 may include a first case 300a and a second case 300b. Each of the first cell module assembly and the second cell module assembly 220 may be housed in the internal space of each of the first case 300a and the second case 300b. The second cell module assembly 220 may be stacked on the first cell module assembly. The first case 300a and the second case 300b may be configured to be capable of coupling and separation. The first case 300a may include an upper coupling part 320, and a fastening hole 321 may be formed in the upper coupling part 320 of the first case 300a. The second case 300b may include a lower coupling part 330. The lower coupling part 330 of the second case 300b may include a plunger 331 and a push plate 332. The plunger 331 may include a fastening member 3311, an elastic member 3312, and a fixing member 3313.

First, referring to FIGS. 8 and 9, to couple the first case 300a and the second case 300b, the second case 300b disposed on the upper part of the first case 300a can move downward toward the first case 300a. As the second case 300b moves downward, the fastening member 3311 of the plunger 331 of the second case 300b is pushed and retracted by the uppermost end of the upper coupling part 320 of the first case 300a, and then advanced to its initial position by the elastic member 3312 so that it can be inserted into the fastening hole 321 of the first case 300a. Therefore, the first case 300a and the second case 300b can be coupled.

More specifically, as the second case 300b moves downward toward the first case 300a, the lower part of the fastening member 3311 of the plunger 331 of the second case 300b may make contact with the uppermost end of the upper coupling part 320 of the first case 300a. In this state, if further force is applied downward to the second case 300b, the fastening member 3311 of the second case 300b may be pushed and retracted by the uppermost ends of the upper coupling part 320 of the first case 300a. At this time, the direction of the force applied to the fastening member 3311 of the second case 300b by the uppermost end of the upper coupling part 320 of the first case 300a is an upward direction, and the direction in which the fastening member 3311 retracts may be a direction perpendicular to the direction in which the force is applied. As described above, since a curved surface may be formed at the portion where the fastening member 3311 of the second case 300b makes contact with the uppermost end of the upper coupling part 320 of the first case 300a, the fastening member 3311 may move in a direction different from the direction of the force applied to the fastening member 3311. If the fastening member 3311 of the second case 300b moves further downward in a retracted state, the fastening member 3311 may reach the fastening hole 321 formed in the upper coupling part 320 of the first case 300a. At this time, the elastic force of the elastic member 3312 connected to the fastening member 3311 causes the fastening member 3311 to advance to its initial position, so that the fastening member 3311 may be inserted into the fastening hole 321. Thereby, the first case 300a and the second case 300b, which are stacked up and down, can be coupled together. Thus, according to the present disclosure, the first case 300a and the second case 300b can be easily coupled by simply pressing downward on the second case 300b, which is stacked on the upper part of the first case 300a.

Referring to FIGS. 10 and 12, in a state where the first case 300a and the second case 300b are coupled, the push plate 332 of the second case 300b may move upward, and push the fastening member 3311 of the second case 300b to retract it. Thereby, the fastening member 3311 may be detached from the fastening hole 321 of the first case 300a, thereby allowing the first case 300a and the second case 300b to be separated.

More specifically, since the upper surface of the second case 300b is opened in a state where the first case 300a and the second case 300b are coupled, the second cell module assembly 220 may be moved upward using the handle 133 disposed on the upper surface of the second case 300b. At this time, the push plate 332 formed on the inner surface of the second case 300b may be seated on the protruding part 131 while the hooking part 3321 is caught by the hooking protrusion 132 of the assembly frame 130. Further, the push plate 332 may be located on the lower part of the fastening member 3311. Therefore, when the second cell module assembly 220 is lifted using the handle 133, the second cell module assembly 220 and the push plate 332 seated thereon can move upward together. The push plate 332, which moves upward, can push the fastening member 3311 disposed on the upper part and retract it. As a result, the fastening member 3311 of the second case 300b is detached from the fastening hole 321 of the first case 300a, so that the first case 300a and the second case 300b can be separated. As such, according to an embodiment of the present disclosure, the first case 300a and the second case 300b can be easily separated by simply lifting the second cell module assembly 220 stacked on the upper part.

Consequently, the battery pack 100 according to an embodiment of the present disclosure is configured to secure a coupling force of certain level or higher between the cases 300 through a structure in which the plunger 331 is inserted into the fastening hole 321, and also the plunger 331 and the push plate 332 are configured to be movable, thereby allowing the cases 300 to be easily coupled and separated. Furthermore, since the coupling structure between the cases 300 is formed on the inside surface of the case 300 and is not exposed to the outside, the coupling structure can be prevented from being damaged by the external environment.

The above-described battery module and battery pack including the same can be applied to various devices. Such a device can be applied to a vehicle means such as an electric bicycle, an electric vehicle, or a hybrid vehicle, but the present disclosure is not limited thereto, and is applicable to various devices capable of using a battery module and a battery pack including the same, which also falls under the scope of the present disclosure

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery pack
110: battery cell
120: battery cell stack
130: assembly frame
131: protruding part
132: hooking protrusion
133: handle
200: cell module assembly
300: case
310: side wall
320: upper coupling part
321: fastening hole
330: lower coupling part
331: plunger
332: push plate
400: base part
500: protection part

## Claims

1. A battery pack comprising:
a first case configured to house a first cell module assembly; and
a second case configured to house a second cell module assembly stacked on the first cell module assembly, and capable of being coupled to and separated from the first case,
wherein a lower coupling part configured to be movable is formed on the inside surface of the second case, and
wherein an upper coupling part coupled with at least a part of the lower coupling part is formed on the upper part of the first case.

2. The battery pack according to claim 1, wherein:
the lower coupling part comprises a plunger of which at least a part is movable, and
the upper coupling part is formed with a fastening hole into which at least a part of the plunger is inserted.

3. The battery pack according to claim 2, wherein:
the plunger comprises:
a fastening member configured to be movable and inserted into the fastening hole of the first case; and
an elastic member that moves the fastening member using elastic force, and
as the second case moves downward, the fastening member is pushed and retracted by the upper coupling part, and then advanced to its initial position by the elastic member to be inserted into the fastening hole, thereby coupling the first case and the second case.

4. The battery pack according to claim 3, wherein:
the lower coupling part further comprises a push plate which is formed under the fastening member on the inside surface of the second case, and
in a state where the first case and the second case are coupled, the push plate is moved upward to push and retract the fastening member, so that the fastening member is detached from the fastening hole and the first case and the second case are separated.

5. The battery pack according to claim 4, wherein:
the upper coupling part of the fastening member or the part in contact with the push plate is formed with a curved surface.

6. The battery pack according to claim 5, wherein:
the fastening member is movable in a direction perpendicular to the direction in which the first cell module assembly and the second cell module assembly are stacked.

7. The battery pack according to claim 4, wherein:
the plunger further comprises a fixing member fixed to the second case, and
the elastic member is configured such that one side is connected to the fastening member and the other side is connected to the fixing member.

8. The battery pack according to claim 4, wherein:
the push plate is formed to extend long along a circumference of the inside surface of the second case.

9. The battery pack according to claim 8, wherein:
the push plate is movable along the direction in which the first cell module assembly and the second cell module assembly are stacked.

10. The battery pack according to claim 9, wherein:
the second cell module assembly comprises:
a battery cell stack; and
an assembly frame configured to house the battery cell stack.

11. The battery pack according to claim 10, wherein:
the assembly frame is formed with a protruding part that extends from a corner of the lower surface of the assembly frame in a direction parallel to the extension direction of the lower surface of the assembly frame, and
the push plate is seated on the protruding part of the assembly frame.

12. The battery pack according to claim 11, wherein:
the protruding part is formed to extend from an apex of the lower surface of the assembly frame.

13. The battery pack according to claim 11, wherein:
the protruding part is formed with a hooking protrusion protruded upward from the protruding part,
the push plate is formed with a hooking part recessed from the inside surface of the second case toward the internal space in which the second cell module assembly is housed, and
the push plate is seated on the protruding part of the assembly frame while the hooking part is caught by the hooking protrusion.

14. The battery pack according to claim 13, wherein:
the second case has a form where the upper and lower parts are opened, and
one or more handles are provided on the upper surface of the second cell module assembly.

15. A device comprising the battery pack according to claim 1.
